# FASCICULE DE BREVET EUROPEEN

(11) **EP 4 096 408 B1**
(45) Date de publication et mention de la délivrance du brevet: **29.11.2023**
(21) Numéro de dépôt: 21707000.2
(22) Date de dépôt: 29.01.2021
(51) Int. Cl.: A01N 63/16, A01N 25/04, A01P 7/02

(54) **METHODE DE DISPERSION D'ACARIENS PREDATEURS VIVANTS DU GENRE PHYTOSEIULUS UTILISES EN LUTTE BIOLOGIQUE**
VERFAHREN ZUM DISPERGIEREN LEBENDER RAUBMILBEN DER GATTUNG PHYTOSEIULUS ZWECKS BIOKONTROLLE
METHOD FOR DISPERSING LIVING PREDATORY MITES OF THE GENUS PHYTOSEIULUS USED FOR BIOCONTROL

(30) Priorité: 31.01.2020 FR 2000988
(43) Date de publication de la demande: 07.12.2022
(73) Titulaire: Bioline Agrosciences France, 75016 Paris (FR)
(72) Inventeur: MAIGNET, Pascal, 06460 Saint Vallier de Thiey (FR); BEN SOUSSAN, Tony, 06130 Grasse (FR)
(74) Mandataire: Regimbeau
(86) Numéro de dépôt international: PCT/FR2021/050171
(87) Numéro de publication internationale: WO 2021/152271

(56) Documents cités:
- WO-A1-2016/023957
- GOLDBART R ET AL: "ENZYMATICALLY CONTROLLED RESPONSIVE DRUG DELIVERY SYSTEMS", POLYMERS FOR ADVANCED TECHNOLOGIES, WILEY & SONS, BOGNOR REGIS, GB, vol. 13, no. 10-12, 1 octobre 2002 (2002-10-01), pages 1006-1018, XP001143852, ISSN: 1042-7147, DOI: 10.1002/PAT.275

## Description

L'invention concerne une composition et un procédé de dispersion d'agents de contrôle biologique vivants de la famille des phytoséides du genre *Phytoseiulus.*

Lors de la dispersion des acariens prédateurs du genre *Phytoseiulus,* sont traditionnellement utilisées des bouteilles contenant du support dans lequel se déplacent les acariens. Les acariens vont se déplacer vers le haut du conditionnement et cela aboutit à une répartition très hétérogène des acariens lors de leur sortie des bouteilles.

Il existe donc un besoin de moyens de pulvérisation des acariens vivants et mobiles en milieu aqueux sur des végétaux ou supports de cultures dans le cadre d'une stratégie de biocontrôle.

Or, les acariens du genre *Phytoseiulus* sont connus pour être fragiles, strictement aériens, peu adaptables à une forte hygrométrie (par exemple du sol). WO2016/023957 décrit des gels contenant des oeufs d'arthropodes, mais ceux-ci sont destinés à nourrir d'autres agents de biocontrôle et non d'agir par eux-mêmes.

Contre toute attente, les inventeurs ont tout d'abord observé que des acariens *Phytoseiulus persimilis* peuvent être dispersés de façon homogène et survivre sans diminution de leurs caractéristiques biologiques (longévité, fécondité) plusieurs heures dans un gel aqueux d'amidon de maïs modifié.

En outre, ils ont observé que la sortie du gel de ces acariens rendue difficile par l'action collante du gel lors du séchage est possible avec un taux de sortie satisfaisant et peut être facilitée par l'ajout d'une enzyme de dégradation du gel.

On entend par « taux de sortie satisfaisant » un taux de sortie supérieur à 50 %, de préférence supérieur à 80 %.

La solution proposée par l'invention présente donc les avantages suivants :
∘ Homogénéité de la dispersion des acariens et homogénéité des lâchers
∘ Facilité d'utilisation : survie des acariens pendant plusieurs heures sans effet notables sur les traits d'histoire de vie
∘ Accessibilité sur des cultures sur lesquelles le poudrage n'est pas aisé : ex- framboisiers
∘ Gain de temps de l'application

### RESUME DE L'INVENTION

Un premier objet de l'invention concerne une composition aqueuse pulvérisable destinée à épandre des agents de contrôle biologique comprenant des agents de contrôle biologique vivants de la famille des phytoséides du genre *Phytoseiulus* dispersés de façon homogène dans un gel préparé à partir d'un ou plusieurs épaississants et/ou gélifiants et d'une solution aqueuse, lesdits épaississants et/ou gélifiants étant non toxiques pour lesdits agents de contrôle biologique et ledit gel présentant une viscosité dynamique à gradient de vitesse nulle comprise entre 1 et 30 000 mPa.s.

Un autre objet de l'invention concerne un procédé de préparation d'une composition selon l'invention, comprenant les étapes successives de :
1. Dissolution de ou des épaississants et/ou gélifiants dans une base aqueuse, de préférence dans l'eau, jusqu'à formation d'un gel,
2. Ajout des agents de contrôle biologique de la famille des phytoséides du genre *Phytoseiulus* et leur dispersion de façon homogène dans ledit gel,
3. Éventuellement ajout d'une enzyme capable de dégrader ledit gel à une concentration permettant une dégradation totale dudit gel en moins de 12 heures, de préférence en moins de 2h.

Un autre objet de l'invention concerne l'utilisation d'une composition selon l'invention, pour améliorer l'efficacité des procédés de contrôle biologique.

Un autre objet de l'invention concerne une méthode de contrôle biologique comprenant une étape d'application sur les plantes d'une composition selon l'invention.

### DESCRIPTION DETAILLEE

L'invention concerne une composition aqueuse pulvérisable destinée à épandre des agents de contrôle biologique comprenant des agents de contrôle biologique vivants de la famille des phytoséides du genre *Phytoseiulus* dispersés de façon homogène dans un gel préparé à partir d'un ou plusieurs épaississants et/ou gélifiants et d'une solution aqueuse, lesdits épaississants et/ou gélifiants étant non toxiques pour lesdits agents de contrôle biologique et ledit gel présentant une viscosité dynamique à gradient de vitesse nulle comprise entre 1 et 30 000 mPa.s.

De préférence, ledit gel présente une viscosité dynamique à gradient de vitesse nulle comprise entre 10 et 25 000, de manière encore préférentielle comprise entre 2 et 5000 mPa.s, de manière encore préférentielle comprise entre 60 et 4 500 mPa.s, de manière encore préférentielle comprise entre 80 et 150 mPa.s.

De préférence, la composition selon l'invention permet de maintenir au moins 60 %, de préférence au moins 70 %, de manière encore préférée au moins 80 %, de manière particulièrement préférée au moins 90 % des agents de contrôle biologique de la famille des phytoséides du genre Phytoseiulus vivants pendant au moins 2h, de préférence 6h, de manière encore préférée 12h.

De préférence, la composition selon l'invention permet de maintenir au moins 60 %, de préférence au moins 70 %, de manière encore préférée au moins 80 %, de manière particulièrement préférée au moins 90 % de la longévité témoin des agents de contrôle biologique de la famille des phytoséides du genre Phytoseiulus pendant au moins 2h, de préférence 6h, de manière encore préférée 12h.

La « longévité témoin » est définie comme une mortalité inférieure à 20% à 5 jours.

De préférence, la composition selon l'invention permet de maintenir au moins 60 %, de préférence au moins 70 %, de manière encore préférée au moins 80 %, de manière particulièrement préférée au moins 90 % de la fécondité témoin des agents de contrôle biologique de la famille des phytoséides du genre Phytoseiulus pendant au moins 2h, de préférence 6h, de manière encore préférée 12h.

La « fécondité témoin » est définie comme une fécondité supérieure ou égale à 10 œufs/femelle/5 jours.

La composition selon l'invention permet, après sa dispersion ou pulvérisation en gouttes, un taux de sortie du gel des agents de contrôle biologique de la famille des phytoséides du genre Phytoseiulus vivants supérieur à 60 %.

De préférence, lesdits agents de contrôle biologique de la famille des phytoséides du genre Phytoseiulus sont choisis dans le groupe constitué de *Phytoseiulus persimilis, Phytoseiulus macropilis, Phytoseiulus longipes* et *Phytoseiulus fragariae.*

### Les épaississants/gélifiants

Les épaississants/gélifiants appropriés et leur concentration pour préparer la composition selon l'invention sont sélectionnés pour satisfaire au critère de viscosité décrit ci-dessus, pour permettre une dispersion de façon homogène dans la composition des agents de contrôle biologique de la famille des phytoséides du genre Phytoseiulus et pour être non-toxiques pour lesdits agents de contrôle biologique de la famille des phytoséides du genre Phytoseiulus.

« Non-toxique » signifie moins de 20 % d'agents de contrôle biologique morts au bout de 12h.

En outre, les épaississants/gélifiants appropriés pour préparer la composition selon l'invention sont sélectionnés pour n'être ni toxiques pour les plantes de culture visées, ni pour le consommateur desdites plantes ou sous-produits desdites plantes.

De préférence, les épaississants/gélifiants appropriés pour préparer la composition selon l'invention sont des épaississants/gélifiants alimentaires.

De manière plus préférée, les épaississants/gélifiants appropriés pour préparer la composition selon l'invention sont choisis dans le groupe constitué des :
- polyosides et osides

On peut citer dans cette famille à titre d'exemples : alginate, amidon de maïs modifié, amylopectine, carraghénanes, chitosan, dextrine, gomme de guar, gomme de xanthane, glycérol, gomme de konjac.
- sels de polyacrylate

On peut citer dans cette famille à titre d'exemples : Carbomer 940 (acide polyacrylique), Gel maker emu (polyacrylate de sodium).
- dérivés de la povidone

On peut citer dans cette famille à titre d'exemples : PVP (Polyvinylpyrrolidone).
- dérivés de la cellulose

On peut citer dans cette famille à titre d'exemples : Carboxyméthylcellulose, hydroxypropylcellulose.
- sels métalliques

On peut citer dans cette famille à titre d'exemples : Chlorure de calcium, chlorure de potassium, sulfate d'aluminium.

De préférence, lesdits épaississants/gélifiants sont utilisés dans la composition selon l'invention à une concentration comprise entre 0,5 et 200 g/L, de préférence entre 1 et 90 g/L, de préférence encore entre 2 et 40 g/L.

De manière plus préférée, les épaississants/gélifiants appropriés pour préparer la composition selon l'invention sont choisis dans le groupe constitué des polyosides et des osides.

De manière particulièrement préférée, lesdits polyosides et osides sont choisis dans le groupe constitué de l'amidon de maïs modifié, des carraghénanes, de la gomme xanthane et de la gomme de konjac.

De préférence, l'amidon de maïs modifié est utilisé à une concentration comprise entre 30 et 90 g/L, de préférence à 34 g/L.

De préférence, un gel d'amidon de maïs modifié est utilisé à une viscosité dynamique à gradient de vitesse nulle comprise entre 60 et 25 100 mPa.s, de préférence à 80 mPa.s.

De préférence, les carraghénanes sont utilisées à une concentration comprise entre 1 et 10 g/L, de préférence à 3 g/L.

De préférence, un gel de carraghénanes est utilisé à une viscosité dynamique à gradient de vitesse nulle comprise entre 1 et 4 900 mPa.s, de préférence à 2 mPa.s.

De préférence, la gomme xanthane est utilisée à une concentration comprise entre 0,5 et 5 g/L, de préférence à 2 g/L.

De préférence, un gel de gomme xanthane est utilisé à une viscosité dynamique à gradient de vitesse nulle comprise entre 7 et 1680 mPa.s, de préférence à 135 mPa.s.

De préférence, la gomme de konjac est utilisée à une concentration comprise entre 0,5 et 10 g/L, de préférence à 4 g/L.

De préférence, un gel de gomme de konjac est utilisé à une viscosité dynamique à gradient de vitesse nulle comprise entre 1 et 450 mPa.s, de préférence à 27 mPa.s.

### Les enzymes

La composition selon l'invention peut en outre comprendre une enzyme capable de dégrader ledit gel préparé à partir d'un ou plusieurs épaississants et/ou gélifiants et d'une solution aqueuse à une concentration permettant une dégradation totale dudit gel en moins de 12 heures, de préférence en moins de 6h, de manière encore préférée en moins de 2h.

L'ajout de l'enzyme à la composition permet d'améliorer le taux de sortie du gel des agents de contrôle biologique de la famille des phytoséides du genre *Phytoseiulus* vivants après dispersion ou pulvérisation de la composition.

De préférence, le taux de sortie d'une composition selon l'invention avec enzyme est supérieur à 80 %.

De préférence, l'enzyme est ajoutée en dernier à la composition selon l'invention.

De préférence, l'enzyme est ajoutée à la composition selon l'invention moins de 2h avant sa dispersion/pulvérisation, de préférence juste avant sa dispersion/pulvérisation. L'enzyme est bien entendu appropriée pour dégrader ledit épaississant/gélifiant de la composition.

Les conditions les plus favorables sont obtenues lorsque l'enzyme dégrade rapidement le gel puisque plus le gel est rapidement dégradé, plus les agents de contrôle biologique sont rapidement libérés.

L'homme du métier saura choisir la concentration de l'enzyme en fonction de son activité enzymatique, de la température optimale, des concentrations en épaississant et de la durée d'hydrolyse souhaitée.

De préférence, la concentration de l'enzyme est choisie pour dégrader 100 % du gel en moins de 12h, de préférence en moins de 6h, de manière encore préférée en moins de 2h, de manière particulièrement préférée en moins de 1 min.

Par exemple, on utilisera des enzymes :
- Hydrolysant les liaisons osidiques pour la famille des osides/polyosides.

Dans le cas de l'alginate, l'alginate lyase dégrade l'alginate par *β*-élimination des liaisons osidique.

Dans le cas de l'amidon modifié de maïs, l'alpha-amylase hydrolyse les liaisons osidiques alpha (1,4). Par exemple, on utilise une alpha-amylase à une activité enzymatique de 800 FAU/g à 20°C, 1 FAU hydrolysant 17 mg d'amidon par minute. Pour dégrader 100 mL d'amidon de maïs modifié à 34 g/L en 1 minute, il faut 200 FAU soit 0,25 g d'alpha-amylase. Pour une dégradation en deux heures, il faut 1,6 FAU soit 0,002 g d'alpha-amylase. Enfin, pour une dégradation en 12h, il faut 0,27 FAU soit 0,3 mg d'alpha-amylase.

Dans le cas de l'amylopectine, l'alpha-amylase hydrolysant les liaisons osidiques alpha (1,4).

Dans le cas des dextrines, la glycose hydrolase limite dextrinase qui hydrolyse les liaisons osidiques alpha (1,6).

Dans le cas des carraghénanes, la k-carraghénase qui hydrolyse les liaisons osidiques alpha (1,4).

Dans le cas des gommes de Guar et de Xanthane, la bêta-mannanase qui hydrolyse de manière aléatoire les liaisons (1,4)-β-D-mannosidique. Pour la Gomme de Xathane, la xanthane lyase hydrolyse les liaisons beta-D-mannosyle-beta-D-1,4-glucuronosyle.

Dans le cas du chitosan, la chitosanase qui hydrolyse les liaisons osidiques beta (1,4) entre les résidus de D-glucosamine.

Dans le cas du konjac, l'endo-1,4 beta-mannanase hydrolyse les liaisons osidiques beta (1,4) des résidus glucomannane.
- Pour les dérivés de la cellulose :

L'Endo-cellulase : brise la structure cristalline de la cellulose en chaînes polysaccharidiques.

L'Exo-cellulase : coupe 2-4 unités aux terminaisons des chaînes polysaccharides.

La β-glucosidase : hydrolyse les chaînes polysaccharidiques en monosaccharides.

L'Oxidative cellulase : dépolymérise la cellulose

La cellulose phosphorylase : dépolymérise la cellulose en utilisant des phosphates.

### Le procédé de préparation de la composition

Le procédé de préparation de la composition selon l'invention comprend les étapes suivantes :
- Dissolution de ou des épaississants et/ou gélifiants dans une base aqueuse, de préférence dans l'eau, jusqu'à formation d'un gel,
- Ajout des agents de contrôle biologique de la famille des phytoséides du genre *Phytoseiulus* et leur dispersion de façon homogène dans ledit gel,
- Éventuellement ajout d'une enzyme capable de dégrader ledit gel à une concentration permettant une dégradation totale dudit gel en moins de 12 heures, de préférence en moins de 2h.

### Ce procédé de préparation est réalisé de préférence entre 18°C et 25°C, de manière particulièrement préférée à 20°C.

### Ce procédé de préparation est réalisé de préférence à une humidité relative supérieure à 30 %, de préférence 60 %.

### Le procédé de dispersion de la composition

De préférence, les compositions selon l'invention sont appliquées sur les plantes par pulvérisation.

Pour pulvériser cette solution sans blesser ou tuer les acariens, la pression utilisée doit être faible et les buses ne doivent pas présenter de partie pouvant les heurter. Une solution de pulvérisateur à basse pression type pistolet à peinture peut par exemple être utilisée. Le liquide est entrainé par le passage de l'air et ne peut en aucune manière blesser les acariens.

### Utilisations

La composition selon l'invention peut être utilisée pour améliorer l'efficacité des procédés de contrôle biologique.

Les compositions selon l'invention sont adaptées pour être dispersées sur des cultures choisies parmi les arbres fruitiers, la vigne, les cultures légumières, les cultures de plein champ, les cultures sous-abri et les cultures ornementales.

Les compositions selon l'invention sont adaptées pour la lutte biologique contre les espèces d'acarien du genre *Tetranychus,* en particulier *Tetranychus urticae.*

### FIGURES

Figure 1A : Effet d'un gel d'amidon de maïs modifié à 34 g/L sur la fécondité de *Phytoseiulus persimilis* sans pulvérisation ± alpha-amylase A. = répétition 1
Figure1B : Effet d'un gel d'amidon de maïs modifié à 34 g/L sur la fécondité de *Phytoseiulus persimilis* sans pulvérisation ± alpha-amylase B. = répétition 2
Figure 2 : Effet d'un gel d'amidon de maïs modifié à 34 g/L sur la fécondité de *Phytoseiulus persimilis* avec pulvérisation ± alpha-amylase
Figure 3 : Etude de la répartition homogène des *Phytoseiulus persimilis*

### EXEMPLES

### Exemple 1 : études des effets d'un gel d'amidon de maïs modifié sur les caractéristiques biologiques de Phytoseiulus persimilis

### Matériel et méthodes

Conditions expérimentales : 25°C et 75 % RH, photopériode de 16/8
Etude de la fécondité et de la longévité : n = 33 individus par modalité, 2 répétitions
Etude du pourcentage de sortie des acariens du dispositif : n = 100 individus par modalité, 4 répétitions
Etude de la répartition homogène des *Phytoseiulus persimilis* dans la composition : Répétition = 1, Réplicas = 2 dans le temps t=0 (juste après la répartition) et t= 30 minutes, 5 fractions avec 590 persimilis comptés par réplica. Les *Phytoseiulus persimilis* sont répartis dans le gel 30 minutes après réalisation du gel.
Epaississant = amidon de maïs modifié
Concentration de l'épaississant : 34 g/L
Enzyme = alpha-amylase d'Aspergillus oryzae, ≥ 800 FAU/g
Concentration de l'enzyme : 480 µL/L

### Résultats

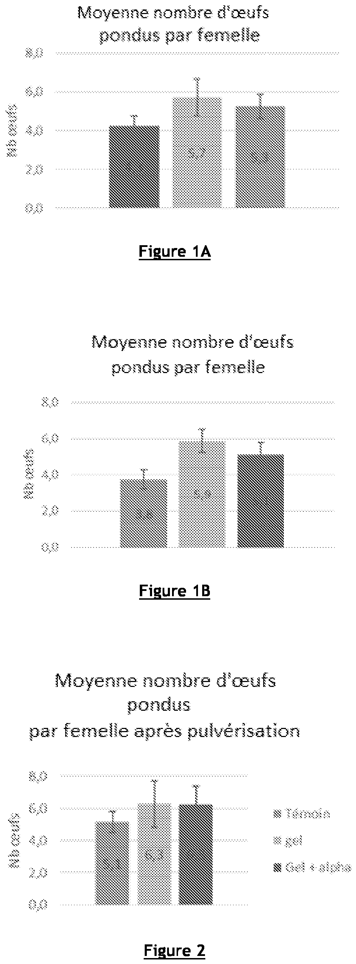

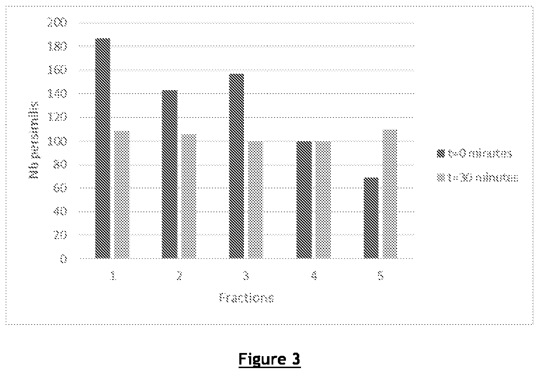

Les résultats sont décrits aux figures 1, 2 et 3 et dans le tableau 1 ci-dessous.

Aucune différence significative n'est observée quelle que soit les conditions sur la fécondité des acariens et sur la longévité des acariens femelles.

La répartition est homogène.

**Tableau 1. Effet de la solution sur la longévité de Phytoseiulus persimilis avec ou sans pulvérisation**

| **Répétition** | **Modalité** | **Femelles en vie à 5 jours** |
|---|---|---|
| 1 (sans pulvérisation) | Témoin | 80 % |
| | Amidon de maïs modifié | 84 % |
| | Amidon de maïs modifié + alpha-amylase | 86 % |
| 2 (sans pulvérisation) | Témoin | 77 % |
| | Amidon de maïs modifié | 85 % |
| | Amidon de maïs modifié + alpha-amylase | 82 % |
| 1 (après pulvérisation) | Témoin | 78 % |
| | Amidon de maïs modifié | 77% |
| | Amidon de maïs modifié + alpha-amylase | 80 % |

### Exemple 2 : Test de survie des Phytoseiulus persimilis dans différents épaississants

### Matériel et méthodes :

18 épaississants autorisés dans l'alimentation ont été sélectionnés :

| Polyosides et osides | Sels de Polyacrylate | Dérivés de la Povidone | Dérivés de la Cellulose | Sels métalliques |
|---|---|---|---|---|
| Alginate | Carbomer 940 | PVP: Poly vinyl pyrrolidone | Carboxyméthylcellulose | Chlorure de calcium |
| Amidon de maïs modifié | Gel Maker emu | | Hydroxypropylcellulose | Chlorure de potassium |
| Amylopectine | | | | Sulfate d'Aluminium |
| Carraghenanes | | | | |
| Chitosan | | | | |
| Dextrine | | | | |
| Gomme de Guar | | | | |
| Gomme de Xanthane | | | | |
| Glycérol | | | | |
| Konjac | | | | |

Les concentrations testées sont :

| Épaississants | Concentration minimale (g/L) | Concentration testée (g/L) | Concentration maximale (g/L) |
|---|---|---|---|
| Alginate | 1 | 10 | 20 |
| Amidon de maïs modifié | 30 | 34 | 90 |
| Amylopectine | 25 | 67 | 120 |
| Carraghenanes | 1 | 3 | 10 |
| Chitosan | 50 | 100 | 300 |
| Dextrine | 10 | 46 | 100 |
| Gomme de Guar | 0.5 | 2 | 5 |
| Gomme de Xanthane | 0.5 | 2 | 5 |
| Glycérol | 500 | 860 | 1000 |
| Konjac | 0.5 | 4 | 10 |
| Carbomer 940 | 0.5 | 4 | 10 |
| Gel Maker emu | 0.5 | 4.4 | 10 |
| PVP: Polyvinyl pyrrolidone | 10 | 60 | 200 |
| Carboxyméthylcellulose | 10 | 30 | 100 |
| Hydroxypropylcellulose | 10 | 30 | 150 |
| Chlorure de calcium | 200 | 280 | 740 |
| Chlorure de potassium | 200 | 280 | 330 |
| Sulfate d'Aluminium | 100 | 140 | 350 |

Dans les solutions sont ajoutés 500 persimilis.

Le mélange est noté « homogène » si les persimilis se répartissent de façon homogène dans l'épaississant sans, ou avec peu d'amas pendant plus de 20 minutes.

Dans le cas où les persimilis se répartissent de manière homogène, on réalise un test de sortie de goutte. C'est-à-dire, on prélève à l'aide d'une pipette automatique 2 mL de la solution contenant les persimilis que l'on répartit sous forme de gouttes (30 gouttes sur une feuille de papier A4).

On conserve un peu de solution contenant les persimilis pour évaluer une possible « toxicité » à 12h.

On compte la totalité des individus présents dans les gouttes après le dépôt. Puis on laisse sortir les persimilis que l'on comptera après séchage complet des gouttes à 25 °C 75 %RH.

Les résultats nous permettrons d'obtenir un taux de sortie des individus.

### Résultats :

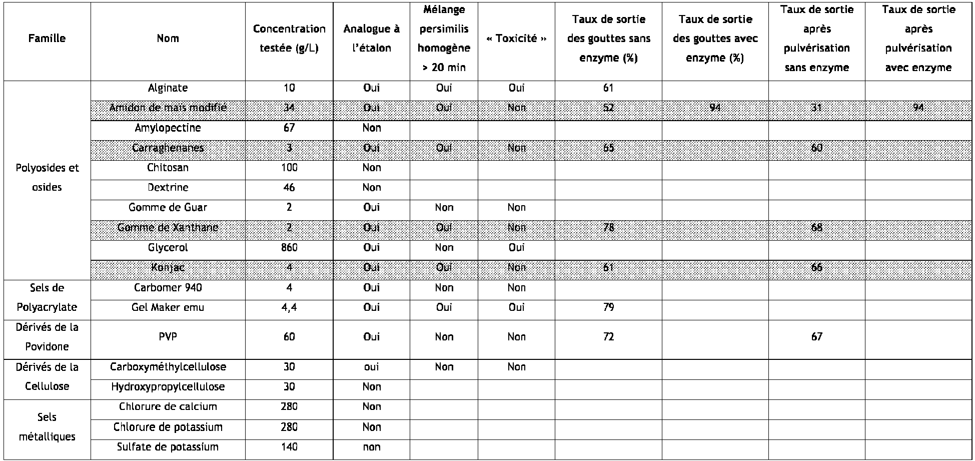

### Les 4 épaississants répondant au plus de critères sont : l'amidon de maïs modifié ; les carraghénanes ; la gomme de xanthane et la gomme de konjac. (En gris dans le tableau)

Par exemple : dans le cas de l'amidon de maïs modifié, on passe de 31 % de sortie sans enzyme à 94 % de sortie avec enzyme (alpha-amylase).

Par exemple : Pour l'amidon de maïs modifié, on passe de 52 % de sortie à 94 % de sortie avec enzyme sur test en gouttes

### Exemple 3 : Mesure de viscosité de différents épaississants

Les viscosités sont mesurées à 22°C avec un viscosimètre rotationnelle (ROTAVISC de la marque IKA) et à une vitesse de rotation observée comprise entre 3 rpm et 15 rpm (l'appareil ajuste la vitesse pour avoir une donnée stable).

| Épaississants | Concentration (g/L) | Viscosité (mPa.s) |
|---|---|---|
| Alginate | 1 | 13 |
| | 10 | 235 |
| | 20 | 5945 |
| Amidon de maïs modifié | 30 | 60 |
| | 34 | 80 |
| | 90 | 25100 |
| Carraghenanes | 1 | 1 |
| | 3 | 2 |
| | 10 | 4900 |
| Gomme de Guar | 0.5 | 1 |
| | 2 | 10 |
| | 5 | 431 |
| Gomme de Xanthane | 0.5 | 7 |
| | 2 | 135 |
| | 5 | 1680 |
| Glycérol | 500 | 36 |
| | 860 | 90 |
| | 1000 | 740 |
| Konjac | 0.5 | 1 |
| | 4 | 27 |
| | 10 | 450 |
| Carbomer 940 | 0.5 | 1 |
| | 4 | 6 |
| | 10 | 17 |
| Gel Maker emu | 0.5 | 1 |
| | 4.4 | 10 |
| | 10 | 258 |
| PVP: Polyvinyl pyrrolidone | 10 | 6 |
| | 60 | 133 |
| | 200 | 3024 |
| Carboxyméthylcellulose | 10 | 1 |
| | 30 | 6 |
| | 100 | 1280 |

## Revendications

1. Composition aqueuse pulvérisable destinée à épandre des agents de contrôle biologique comprenant des agents de contrôle biologique vivants de la famille des phytoséides du genre Phytoseiulus dispersés de façon homogène dans un gel préparé à partir d'un ou plusieurs épaississants et/ou gélifiants et d'une solution aqueuse, lesdits épaississants et/ou gélifiants étant non toxiques pour lesdits agents de contrôle biologique et ledit gel présentant une viscosité dynamique à gradient de vitesse nulle comprise entre 1 et 30 000 mPa.s.

2. Composition selon la revendication 1, **caractérisée en ce que** lesdits épaississants et/ou gélifiants sont choisis dans le groupe constitué des polyosides et des osides.

3. Composition selon la revendication 2, **caractérisée en ce que** lesdits polyosides et osides sont choisis dans le groupe constitué de l'amidon de maïs modifié, des carraghénanes, de la gomme xanthane et de la gomme de konjac.

4. Composition selon l'une quelconque des revendications précédentes, **caractérisée en ce que** lesdits agents de contrôle biologique de la famille des phytoséides du genre Phytoseiulus sont choisis dans le groupe constitué de *Phytoseiulus persimilis, Phytoseiulus macropilis, Phytoseiulus longipes* et *Phytoseiulus fragariae.*

5. Composition selon l'une quelconque des revendications précédentes, **caractérisée par** un taux de sortie du gel d'agents de contrôle biologique de la famille des phytoséides du genre Phytoseiulus vivants supérieur à 60 %.

6. Composition selon l'une quelconque des revendications précédentes, comprenant en outre une enzyme capable de dégrader ledit gel préparé à partir d'un ou plusieurs épaississants et/ou gélifiants et d'une solution aqueuse à une concentration permettant une dégradation totale dudit gel en moins de 12 heures, de préférence en moins de 2h.

7. Composition selon la revendication 6, ladite enzyme étant l'alpha-amylase et ledit épaississant/gélifiant étant l'amidon de maïs modifié.

8. Composition selon l'une quelconque des revendications précédentes, le(les)dit(s) épaississants et/ou gélifiants étant présents en une quantité comprise entre 0,5 et 200 g/L.

9. Procédé de préparation d'une composition selon l'une quelconque des revendications précédentes, comprenant les étapes successives de :
- dissolution de ou des épaississants et/ou gélifiants dans une base aqueuse, de préférence dans l'eau, jusqu'à formation d'un gel,
- ajout des agents de contrôle biologique de la famille des phytoséides du genre *Phytoseiulus* et leur dispersion de façon homogène dans ledit gel,
- éventuellement ajout d'une enzyme capable de dégrader ledit gel à une concentration permettant une dégradation totale dudit gel en moins de 12 heures, de préférence en moins de 2h.

10. Utilisation d'une composition selon l'une des revendications 1 à 8, pour améliorer l'efficacité des procédés de contrôle biologique.

11. Méthode de contrôle biologique comprenant une étape d'application sur les plantes d'une composition selon l'une des revendications 1 à 8.

12. Méthode selon la revendication 11 où l'application d'une composition selon l'une des revendications 1 à 8 est réalisée par pulvérisation.

## Patentansprüche

1. Spritzbare wässrige Zubereitung zur Ausbringung biologischer Schädlingsbekämpfungsmittel, darunter biologische Schädlingsbekämpfungsmittel mit lebenden Raubmilben aus der Familie der Phytoseiidae der Gattung Phytoseiulus, homogen dispergiert in einem Gel, hergestellt aus einem oder mehreren Verdickungs- und/oder Geliermitteln und einer wässrigen Lösung, wobei die Verdickungs- und/oder Geliermittel bei diesen biologischen Schädlingsbekämpfungsmitteln ungiftig sind und das Gel eine dynamische Viskosität mit einem Null-Geschwindigkeitsgradienten zwischen 1 und 30.000 mPas aufweist.

2. Zubereitung nach Anspruch 1, **dadurch gekennzeichnet, dass** die Verdickungs- und/oder Geliermittel aus der Gruppe der Polyosiden und Osiden ausgewählt werden.

3. Zubereitung nach Anspruch 2, **dadurch gekennzeichnet, dass** die Polyosiden und Osiden aus der Gruppe der modifizierten Maisstärke, der Carrageene, der Xanthangummi und der Konjakgummi ausgewählt werden.

4. Zubereitung nach einem der vorstehenden Ansprüche, **dadurch gekennzeichnet, dass** diese biologischen Schädlingsbekämpfungsmittel der Familie der Phytoseiidae der Gattung Phytoseiulus aus der Gruppe der *Phytoseiulus persimilis, Phytoseiulus macropilis, Phytoseiulus longipes* und *Phytoseiulus fragariae* ausgewählt werden.

5. Zubereitung nach einem der vorstehenden Ansprüche, **gekennzeichnet durch** eine Ausgangsrate des Gels biologischer Schädlingsbekämpfungsmittel mit lebenden Raubmilben aus der Familie der Phytoseiidae der Gattung Phytoseiulus von über 60 %.

6. Zubereitung nach einem der vorstehenden Ansprüche, die außerdem ein Enzym enthält, welches das Gel, hergestellt aus einem oder mehreren Verdickungs- und/oder Geliermitteln und einer wässrigen Lösung, in eine Konzentration zersetzen kann, die einen vollständigen Abbau des Gels in weniger als 12 Stunden, vorzugsweise in weniger als 2 Stunden, ermöglicht.

7. Zubereitung nach Anspruch 6, wobei es sich bei dem Enzym um Alpha-Amylase und bei dem Verdickungs-/Geliermittel um modifizierte Maisstärke handelt.

8. Zubereitung nach einem der vorstehenden Ansprüche, wobei das/die Verdickungs- und/oder Geliermittel in einer Menge zwischen 0,5 und 200 g/l vorhanden ist/sind.

9. Verfahren zur Herstellung einer Zubereitung nach einem der vorstehenden Ansprüche, das die folgenden aufeinanderfolgenden Schritte umfasst:
- Auflösung des bzw. der Verdickungs- und/oder Geliermittel(s) in einer wässrigen Base, vorzugsweise in Wasser, bis sich ein Gel bildet,
- Zugabe biologischer Schädlingsbekämpfungsmittel aus der Familie der Phytoseiidae der Gattung *Phytoseiulus* und deren homogene Dispersion in diesem Gel,
- eventuelle Zugabe eines Enzyms, das dieses Gel in eine Konzentration zersetzen kann, die einen vollständigen Abbau des Gels in weniger als 12 Stunden, vorzugsweise in weniger als 2 Stunden, ermöglicht.

10. Verwendung einer Zubereitung nach einem der Ansprüche 1 bis 8, um die Wirksamkeit biologischer Schädlingsbekämpfungsverfahren zu verbessern.

11. Biologische Schädlingsbekämpfungsmethode, die einen Schritt der Ausbringung einer Zubereitung nach einem der Ansprüche 1 bis 8 auf Pflanzen umfasst.

12. Methode nach Anspruch 11, wobei die Aufbringung einer Zubereitung nach einem der Ansprüche 1 bis 8 durch Spritzen erfolgt.

## Claims

1. Sprayable aqueous composition for spreading biological control agents comprising live biocontrol agents from the phytoseiidae family of the genus Phytoseiulus homogeneously dispersed in a gel prepared from one or more thickening and/or gelling agents and an aqueous solution, said thickening and/or gelling agents being non-toxic for said biocontrol agents and said gel having a dynamic viscosity at zero velocity gradient of between 1 and 30,000 mPa.s.

2. Composition according to claim 1, **characterised in that** said thickening and/or gelling agents are selected from the group consisting of polyosides and osides.

3. Composition according to claim 2, **characterised in that** said polyosides and osides are selected from the group consisting of modified corn starch, carrageenans, xanthan gum and konjac gum.

4. Composition according to any one of the preceding claims, **characterised in that** said biocontrol agents from the phytoseiidae family of the genus Phytoseiulus are selected from the group consisting of *Phytoseiulus persimilis, Phytoseiulus macropilis, Phytoseiulus longipes* and *Phytoseiulus fragariae.*

5. Composition according to any one of the preceding claims, **characterised by** an exit rate of the gel of live biocontrol agents from the family of phytoseiidae of the genus Phytoseiulus greater than 60%.

6. Composition according to any one of the preceding claims, further comprising an enzyme capable of degrading said gel prepared from one or more thickening and/or gelling agents and an aqueous solution at a concentration allowing total degradation of said gel in less than 12 hours, preferably in less than 2 h.

7. Composition according to claim 6, wherein said enzyme is alpha-amylase and said thickening/gelling agent is modified corn starch.

8. Composition according to any one of the preceding claims, wherein said thickening and/or gelling agent(s) are present in an amount of between 0.5 and 200 g/L.

9. Method for preparing a composition according to any one of the preceding claims, comprising the successive steps of:
- dissolving thickening and/or gelling agent(s) in an aqueous base, preferably in water, until a gel is formed,
- adding of biocontrol agents from the family of phytoseiidae of the genus *Phytoseiulus* and their homogeneous dispersion in said gel,
- optionally adding an enzyme capable of degrading said gel to a concentration allowing total degradation of said gel in less than 12 hours, preferably in less than 2 hours.

10. Use of a composition according to one of claims 1 to 8, to improve the effectiveness of the biocontrol methods.

11. Biocontrol method comprising a step of applying to the plants a composition according to one of claims 1 to 8.

12. Method according to claim 11 wherein the application of a composition according to one of claims 1 to 8 is carried out by spraying.
